# EUROPÄISCHE PATENTSCHRIFT

(11) **EP 3 102 845 B1**
(45) Veröffentlichungstag und Bekanntmachung des Hinweises auf die Patenterteilung: **03.04.2019**
(21) Anmeldenummer: 15706362.9
(22) Anmeldetag: 02.02.2015
(51) Int. Cl.: F16D 65/14, F16D 65/18, F16D 65/56

(54) **FAHRZEUGSCHEIBENBREMSE**
VEHICLE DISK BRAKE
FREIN À DISQUE DE VÉHICULE

(30) Priorität: 04.02.2014 DE 102014101341
(43) Veröffentlichungstag der Anmeldung: 14.12.2016
(73) Patentinhaber: BPW Bergische Achsen KG, 51674 Wiehl (DE)
(72) Erfinder: PEHLE, Michael, 51371 Leverkusen (DE); DOWE, Günter, 51588 Nümbrecht (DE); DOWE, Andreas, 51588 Nümbrecht (DE)
(74) Vertreter: Bungartz Christophersen Partnerschaft mbB Patentanwälte
(86) Internationale Anmeldenummer: PCT/DE2015/100043
(87) Internationale Veröffentlichungsnummer: WO 2015/117601

(56) Entgegenhaltungen:
- EP-A1- 1 972 825
- EP-A1- 2 476 929
- WO-A1-2004/059187

## Beschreibung

Die Erfindung betrifft eine Fahrzeugbremse, insbesondere Fahrzeug-Scheibenbremse, mit einer die Bremskraft bereitstellenden Zuspanneinrichtung aus einem Kraftglied, vorzugsweise einem Druckmittelzylinder, und einer druckverstärkenden Hebelanordnung, und mit einer Nachstellvorrichtung zum Nachstellen des verschleißbedingten Lüftspiels der Bremse, wobei Bestandteile der Nachstellvorrichtung ein drehbar angeordnetes, durch die Zuspanneinrichtung betätigbares Antriebselement, ein auf derselben Achse drehbar angeordnetes Nachstellelement und eine im Bewegungsweg zwischen Antriebselement und Nachstellelement angeordnete Übertragungseinrichtung sind, und die Übertragungseinrichtung als wendelförmige Schlingfeder ausgebildet ist, die längs eines ersten Wendelabschnitts radial gegenüber dem Antriebselement, und längs eines zweiten Wendelabschnitts radial gegenüber dem Nachstellelement abgestützt ist.

Fahrzeug-Scheibenbremsen sind zum Ausgleich des Bremsbelag- und/oder des Bremsscheibenverschleißes häufig mit einer Nachstellvorrichtung versehen. Diese passt entsprechend dem zunehmenden Verschleiß den Abstand zwischen den Bremsbelägen und der Bremsscheibe sukzessive an, und hält so dieses sogenannte Lüftspiel in einem konstruktiv vorgegebenen Rahmen.

Eine in eine Scheibenbremse integrierte Nachstelleinrichtung ist aus der DE 10 2011 051 073 A1 bekannt. Die Nachstellung erfolgt mittels zweier zueinander schraubbarer Gewindeelemente. Die Verschraubung weist ein axiales Spiel und damit einen Leerweg auf, dessen Größe die Nachstellung bestimmt. Weitere Elemente der Nachstelleinrichtung sind eine drehmomentabhängig arbeitende Überlastkupplung und eine Einwegekupplung. Die Einwegekupplung arbeitet mit in Umfangsrichtung beweglich angeordneten, zylindrischen Sperrkörpern. Diese können im einen Drehsinn an Rampen auflaufen, wodurch in diesem Drehsinn eine Sperrung und damit eine vollständige Drehmomentübertragung eintritt. Im Gegensinn laufen die Sperrkörper frei, so dass in diesem Drehsinn ein mit nur geringer Drehmomentübertragung eintritt. Die Überlastkupplung ist räumlich getrennt von der Einwegekupplung angeordnet und besteht aus Kugeln, die druckbelastet in kalottenförmigen Einsenkungen in einer axialen Stirnfläche des Nachstellelements sitzen. Bei einem erhöhten Widerstandsmoment verlassen die Kugeln die Einsenkungen.

Zur Realisierung der Einwegekupplung der Nachstelleinrichtung sind aus der WO 97/22814, der EP 0 216 008 B1, der EP 0 730 107 B1, der DE 102 60 597 B4 und der EP 1 972 825 A1 Schlingfedern bekannt. Dies sind zylindrische, gewendelte Federkörper, die unter radialer Vorspannung auf den zylindrischen Außenflächen zweier Wellen oder den zylindrischen Innenflächen zweier Hülsen montiert sind. In der einen Drehrichtung erfolgt eine vollständige, schlupffreie Drehmomentübertragung durch den Reibschluss der Schlingfeder, wohingegen in der entgegengesetzten Drehrichtung eine nur geringe Drehmomentübertragung stattfindet.

Der Erfindung liegt die **Aufgabe** zugrunde, eine mit einer Nachstelleinrichtung zum Nachstellen des verschleißbedingten Lüftspiels versehene Fahrzeugbremse zu schaffen, bei der die Nachstellung konstruktiv einfach aufgebaut ist und mit wenigen Teilen auskommt.

Zur **Lösung** dieser Aufgabe wird eine Fahrzeugbremse mit den Merkmalen des Anspruchs 1 vorgeschlagen.

Bei dieser Fahrzeugbremse ist, um das Nachstellelement zum Ausgleich des verschleißbedingten Lüftspiels der Bremse sukzessive in jeweils gleichsinnige Drehbewegungen zu versetzen, die als Übertragungseinrichtung dienende, wendelförmige Schlingfeder in der Weise ausgebildet, dass sie längs eines ersten Wendelabschnitts radial ausschließlich gegenüber dem Antriebselement, und längs eines zweiten Wendelabschnitts radial ausschließlich gegenüber dem Nachstellelement abgestützt ist, wobei sich die eine Radialabstützung an der Innenseite und die andere Radialabstützung an der Außenseite der Schlingfeder befindet.

Eine solche Schlingfeder vereint die beiden im Stand der Technik bekannten Grundbauarten von Schlingfedern, nämlich die von außen her gegen zwei Wellen, und die von innen her gegen zwei Hülsen abgestützte Schlingfeder. Die Kombination beider Prinzipien erfolgt dergestalt, dass auf einem Wendelabschnitt der Schlingfeder die Radialabstützung nur an deren Innenseite erfolgt, und auf einem anderen Wendelabschnitt der Schlingfeder die Radialabstützung nur an deren Außenseite erfolgt. Dies hat zur Folge, dass über einem Wendelabschnitt durch starken, gleichsam "zupackenden" Reibschluss eine vollständige Drehmomentübertragung erfolgt, hingegen über dem anderen Wendelabschnitt nur ein in seiner Größe begrenztes Drehmoment übertragbar ist, welches sich auch als Freilaufmoment bezeichnen lässt. Dieses nur geringe Drehmoment entspricht dem Ausrückmoment bei Überlastkupplungen, wie sie aus Nachstelleinrichtungen bekannt sind.

Die Schlingfeder kombiniert und vereint daher die Funktion der Einwegekupplung mit der Funktion der Überlastkupplung. Anders als bei bekannten Nachstelleinrichtungen für Fahrzeugbremsen werden keine getrennten Bauteile zur Realisierung einerseits der Einwegekupplung und andererseits der Überlastkupplung benötigt, so dass die Nachstelleinrichtung mit wenigen Bauteilen auskommt und konstruktiv einfach aufgebaut ist.

Mit einer Ausgestaltung wird vorgeschlagen, dass sich jeder der zwei Wendelabschnitte der Schlingfeder über mehrere Wendeln bzw. Wendelumdrehungen erstreckt. Dabei kann die Anzahl der Wendelumdrehungen auf den beiden Wendelabschnitten gleich sein, oder unterschiedlich groß sein. Vorzugsweise erstreckt sich jeder der zwei Wendelabschnitte über mindestens drei Wendelumdrehungen.

Die Schlingfeder kann in spannungslosem Zustand zylindrisch sein mit über ihrer gesamten Länge konstantem Durchmesser.

Für eine optimale Ausnutzung des in der Nachstelleinrichtung vorhandenen Bauraumes kann die Schlingfeder in spannungslosem Zustand gestuft gestaltet sein und aus zwei jeweils zylindrischen Längsabschnitten bestehen. Hierbei weisen die Federwindungen auf dem ersten Längsabschnitt einen kleineren Durchmesser und an ihrer Innenseite die Radialabstützung auf, wohingegen die Federwindungen auf dem zweiten Längsabschnitt einen im Vergleich größeren Durchmesser und an ihrer Außenseite die Radialabstützung aufweisen.

Mit einer weiteren Ausgestaltung wird vorgeschlagen, dass Bestandteil der Hebelanordnung ein in einem Bremsgehäuse der Bremse gelagerter Schwenkhebel ist, der über ein Getriebe in Drehverbindung mit dem Antriebselement steht. Bei dieser Bauart ist das Getriebe vorzugsweise aus zwei zum gegenseitigen Eingriff ausgebildeten Mitnehmern zusammengesetzt, wobei der eine Mitnehmer an dem Schwenkhebel im Abstand zu dessen Schwenkachse, und der andere Mitnehmer an dem Antriebselement im Abstand zu dessen Achse ausgebildet ist.

Zur Bereitstellung eines Leerwegs, über den die Nachstelleinrichtung noch nicht arbeitet, kann das Getriebe in Drehrichtung ein genau eingestelltes Spiel aufweisen.

Nachfolgend werden Ausführungsbeispiele der Erfindung anhand der Zeichnungen beschrieben, und es werden weitere Vorteile angegeben. Es zeigen:
- Fig. 1: einen Längsschnitt entlang der Zuspannachse durch eine mit einer Nachstelleinrichtung versehene Fahrzeug-Scheibenbremse;
- Fig. 2: einen gegenüber Fig. 1 um 90° gedrehten Längsschnitt, wobei nicht alle Teile wiedergegeben sind;
- Fig. 3a, 3b: in Schnittdarstellung die zwischen einem Antriebselement und einem Nachstellelement angeordnete Schlingfeder in einer ersten Situation (Fig. 3a) und in einer zweiten Situation (Fig. 3b);
- Fig. 4a, 4b: in perspektivischer Schnittdarstellung die zwischen dem Antriebselement und dem Nachstellelement angeordnete Schlingfeder in der ersten Situation (Fig. 4a) und in der zweiten Situation (Fig. 4b);
- Fig. 5: für eine zweite Ausführungsform einer Scheibenbremse ebenfalls einen Längsschnitt in der Zuspannachse.

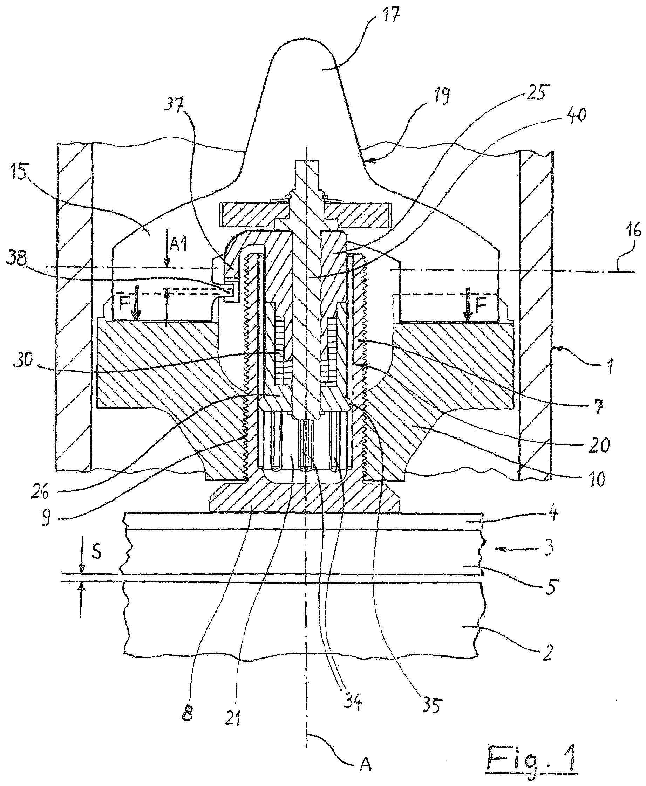

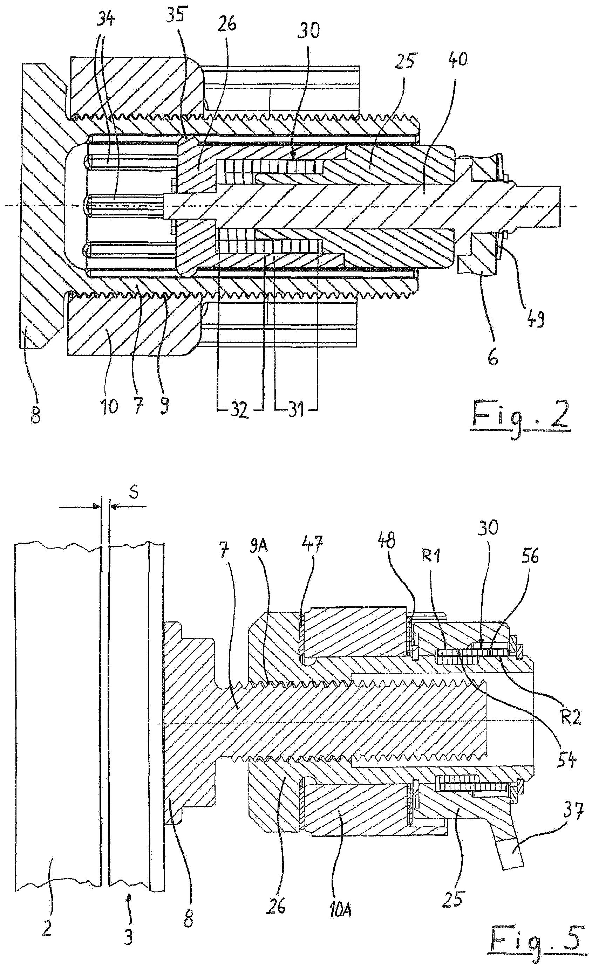

Die Figuren 1 und 2 zeigen in verschiedenen Längsschnitten Einzelteile einer Scheibenbremse mit einer integrierten Vorrichtung zum Nachstellen des verschleißbedingten Lüftspiels der Bremse. Eine solche Vorrichtung kommt insbesondere in einer Gleitsattel-Scheibenbremse für Nutzfahrzeuge zum Ausgleich des mit dem Fahrbetrieb einhergehenden Bremsbelagverschleißes zum Einsatz.

Zusammen mit weiteren Einzelteilen der Fahrzeugbremse ist die Nachstelleinrichtung in einem Bremsgehäuse 1 angeordnet, welches z. B. Bestandteil eines Bremssattels 6 (Fig. 2) der Gleitsattel-Scheibenbremse ist. Bestandteil der Scheibenbremse ist ferner die in Fig. 1 nur ausschnittsweise dargestellte, mit dem Fahrzeugrad verbundene Bremsscheibe 2, gegen die auf jeder Ihrer beiden Seiten jeweils ein Bremsbelag 3 arbeitet. Der Bremsbelag 3 setzt sich in üblicher Weise aus einer Belagrückenplatte 4 und dem eigentlichen Reibbelag 5 zusammen.

Die Beaufschlagung des Bremsbelags 3 mit Bremsdruck erfolgt durch einen gegen den Bremsbelag beweglichen Druckstempel 7, dessen Fuß 8 gegen die Belagrückenplatte 4 anliegt. Der Druckstempel 7 steht in einer zur Übertragung der vollen Bremskräfte geeigneten Gewindeverbindung 9 mit einem in dem Bremsgehäuse 1 längsbeweglich angeordneten Druckstück 10.

An dem Druckstück 10 ist, der Bremsscheibe 2 abgewandt, ein Schwenkhebel 15 einer druckverstärkenden Hebelanordnung abgestützt. Zu diesem Zweck ist der Schwenkhebel 15 auf einer Schwenkachse 16 in dem Bremsgehäuse 1 drehgelagert, und er ist dem Druckstück 10 abgewandt mit einem verlängerten Hebelarm 17 versehen. Gegen diesen Hebelarm arbeitet ein Kraftglied der Fahrzeugbremse. Bei einer druckluftbetätigten Scheibenbremse ist dieses Kraftglied ein Pneumatikzylinder, vorzugsweise ein Membranzylinder. Die von dem Kraftglied erzeugte Kraft wird über den Hebelarm 17 in ein Schwenken des Schwenkhebels 15 um seine Schwenkachse 16 umgesetzt, wodurch es aufgrund der Hebelverhältnisse zu einer Zustellbewegung des Druckstücks 10 kommt. Dies entspricht, wenn keine Verluste in der Bremse auftreten, der Zuspannkraft bzw. der Bremskraft F. Die Anordnung aus dem Kraftglied und der Hebelanordnung bildet gemeinsam die Zuspanneinrichtung 19 der Fahrzeugbremse.

Zur Druckverstärkung ist der Schwenkhebel 15, dem Druckstück 10 zugewandt, als Exzenter geformt, dessen Exzenterfläche sich gegen eine muldenförmige Gegenfläche an dem Druckstück 10 abstützt. Bevorzugt ist der Schwenkhebel 15 in einer gabelförmigen Bauart ausgeführt, wie sie Fig. 1 zeigt. Bei dieser Bauart wird die Betätigungskraft und damit die Bremskraft F zu gleichen Teilen und zu beiden Seiten der zentralen Achse A auf das Druckstück 10 übertragen.

Die Bremse weist in ungebremster Stellung jeweils einen Abstand zwischen der Bremsscheibe 2 und den Bremsbelägen 3 auf, damit die Teile nicht aneinander schleifen. Dieser Abstand wird als Lüftspiel S bezeichnet. Zum Ausgleich des durch den Verschleiß an den beiden Bremsbelägen 3 verursachten vergrößerten Lüftspiels S ist die Fahrzeugbremse mit einer Nachstelleinrichtung 20 versehen, die bei der Ausführungsform nach Figur 1 und Figur 2 weitgehend in den Druckstempel 7 integriert ist, der zu diesem Zweck bremsscheibenabgewandt mit einer großen Aufnahmeöffnung 21 versehen ist, hingegen der Bremsscheibe 2 zugewandt geschlossen ist.

Bestandteile der Nachstelleinrichtung 20 sind unter anderem ein auf der Achse A gelagertes und durch Einwirken des Schwenkhebels 15 verdrehbares Antriebselement 25, ein auf derselben Achse A drehbar gelagertes Nachstellelement 26, sowie eine Übertragungseinrichtung im Bewegungsweg zwischen Antriebselement 25 und Nachstellelement 26. Als Übertragungseinrichtung, mittels der das Nachstellelement 26 sukzessive in jeweils gleichsinnige Drehbewegungen verdreht wird, kommt eine Schlingfeder 30 zum Einsatz. Sie ist ebenfalls auf der Achse A angeordnet.

Das Nachstellelement 26 ist in Bezug auf den Druckstempel 7 drehfest, jedoch axial beweglich. Zu diesem Zweck kann, wie dies die Ausführungsform nach Fig. 1 und Fig. 2 zeigt, der Druckstempel 7 an seiner Innenseite mit Längsnuten 34 versehen sein, in denen außen an dem Nachstellelement 26 angeformte Vorsprünge oder Nasen 35 längsbeweglich geführt sind. Es wird eine unverdrehbare Längsführung des Nachstellelements 26 relativ zu dem Druckstempel 7 erzielt. Durch die Nasen wird auch eine Schwenkbewegung im Zuspannvorgang der Gewindehülse 7 relativ zum Nachstellelement 26 ausgeglichen.

Das Antriebselement 25 ist in Längsrichtung der Achse A ortsfest in dem Bremsgehäuse 1 angeordnet, und ist mit einem radialen Arm 37 versehen, der mit einem an dem Schwenkhebel 15 angeordneten Zapfen 38 koppelbar ist. Der Zapfen 38 hat einen Abstand A1 von der Schwenkachse 16.

Der radiale Arm 37 und der Zapfen 38 bilden gemeinsam ein Getriebe, über das das Antriebselement 25 von dem Schwenkhebel 15 antreibbar ist, obwohl der Schwenkhebel 15 auf einer Schwenkachse 16 gelagert ist, die quer zu der Drehachse A des Antriebselements 25 liegt. Im Rahmen dieses Getriebes bildet daher der Zapfen 38 einen ersten Mitnehmer 38, und der radiale Arm 37 einen zweiten Mitnehmer 37. Durch diese Getriebebauart führt das Verschwenken des Schwenkhebels 15 um die Schwenkachse 16 zu einer Drehung des Antriebselements 25 um die Achse A der Nachstellung. Das Getriebe 38, 37 arbeitet mit Spiel. Im Rahmen dieses Spiels erfolgt keine Mitnahme und damit keine Betätigung des Antriebselements 25, denn das Lüftspiel ist in Ordnung.

Für eine insgesamt axiale Bauweise sitzen sowohl das Antriebselement 25, als auch das Nachstellelement 26 auf einem auf der Achse A angeordneten Stab 40. Der Stab 40 ist auf nicht näher illustrierte Weise axial unbeweglich, jedoch drehbeweglich in Bezug auf das Bremsgehäuse 1 und/oder den Bremssattel 6. Das Nachstellelement 26 ist vorzugsweise drehfest mit dem zentralen Stab 40 verbunden. In diesem Fall ist das Antriebselement 25 drehbeweglich auf dem Stab 40 gelagert.

Mittels des zentralen Stabs 40 lässt sich die Nachstelleinrichtung 20 vollständig in ihre Ausgangsposition zurückzustellen, was üblicherweise beim Austausch verbrauchter Bremsbeläge gegen neue Bremsbeläge erfolgt.

Die der Drehübertragung zwischen Antriebselement 25 und Nachstellelement 26 dienende Schlingfeder 30 kombiniert und vereint in sich die Funktion einer Einwegekupplung mit der Funktion einer Überlastkupplung. Anders als bei bekannten Nachstelleinrichtungen werden daher keine getrennten Bauteile zur Realisierung dieser beiden Funktionen benötigt.

Die in den Figuren 1 und 2 wiedergegebene, aus einer einzigen, durchgehenden Wendel bestehende Schlingfeder 30 ist gestuft gestaltet und besteht aus zwei jeweils zylindrischen Längsabschnitten. Hierbei weisen die Federwindungen auf dem in Fig. 2 rechts angeordneten, ersten Wendelabschnitt 31 einen kleineren Durchmesser und an ihrer Innenseite die Radialabstützung gegen das Antriebselement 25 auf, während die Federwindungen auf dem in Fig. 2 links angeordneten, zweiten Wendelabschnitt 32 einen im Vergleich etwas größeren Durchmesser, und an ihrer Außenseite die Radialabstützung gegen das Nachstellelement 26 aufweisen. Vorzugsweise ist, vor allem aus herstellungstechnischen Gründen, die Dicke der Federwindungen über die gesamte Länge der Wendel konstant.

Werden die beiden Enden der Schlingfeder 30 gegensinnig verdreht, kommt es im einen Fall zu einer leichten Verringerung des Durchmessers der Schlingfeder, und im anderen Fall, d. h. bei umgekehrtem Drehsinn, zu einer leichten Vergrößerung des Durchmessers der Schlingfeder. Diese technischen Zusammenhänge sind bekannt, und von ihnen wird im Stand der Technik beim Einsatz von Schlingfedern als Einwegekupplung oder als Überlastkupplung Gebrauch gemacht. Hierbei ist die Schlingfeder 30 längs eines Wendelabschnitts 31 radial gegen das Antriebselement 25, und längs eines anderen Wendelabschnitts 32 radial gegen das Nachstellelement 26 abgestützt. Die Besonderheit allerdings besteht darin, dass die eine Radialabstützung ausschließlich an der Innenseite, und die andere Radialabstützung ausschließlich an der Außenseite der Schlingfeder 30 erfolgt bzw. sich dort befindet.

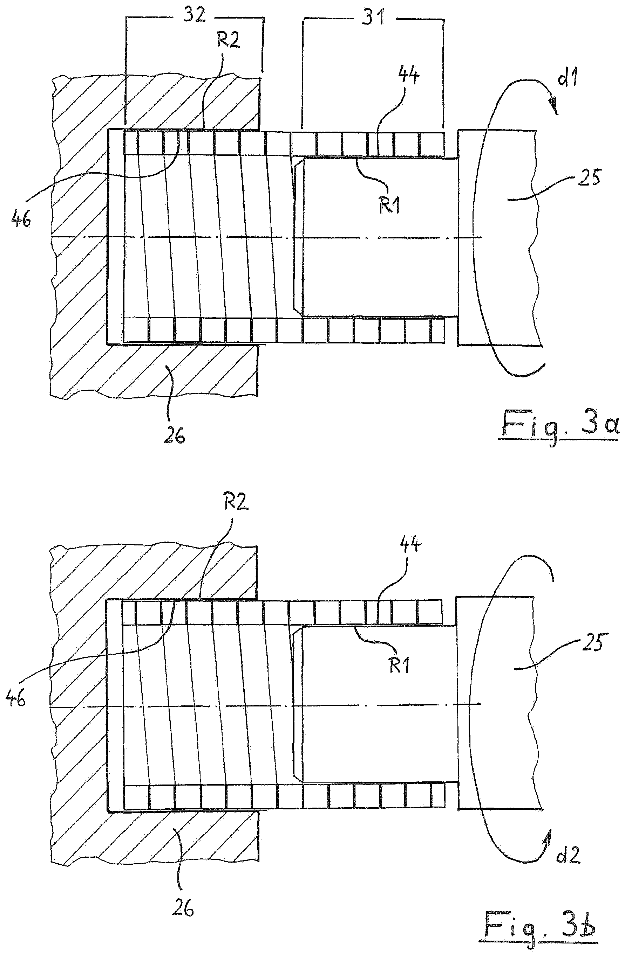

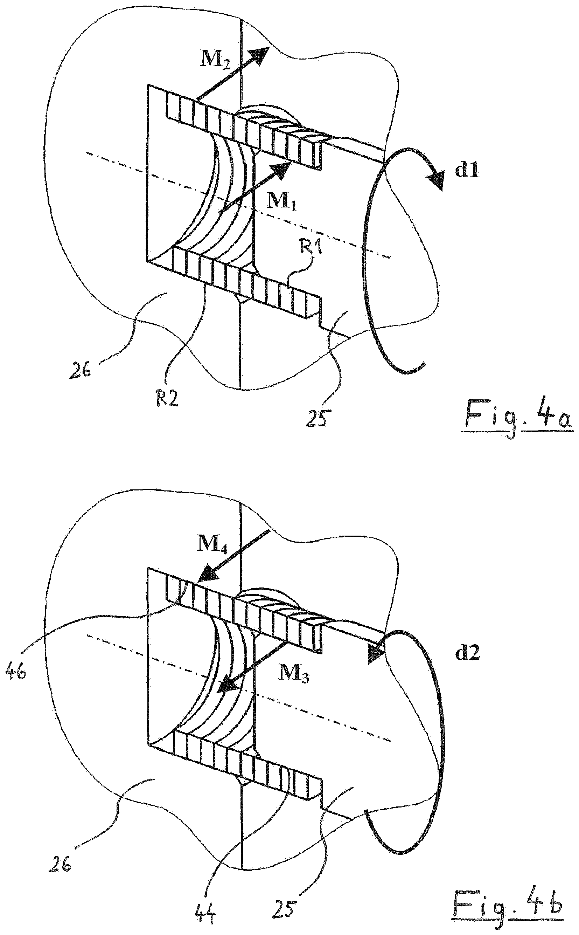

Anhand der zusätzlichen Figuren 3a, 3b, 4a und 4b werden nun die technischen Einzelheiten der Schlingfeder 30 und deren Zusammenwirken mit einerseits dem Antriebselement 25 und andererseits dem Nachstellelement 26 beschrieben.

Die Innenseite des Wendelabschnitts 31 bildet eine Radialabstützung R1 gegen eine zylindrische Außenseite 44 an dem Antriebselement 25. Die Außenseite 44 ist hier ein an dem Antriebselement 25 ausgebildeter Wellenzapfen oder Wellenabschnitt. Umgekehrt bildet die Außenseite des anderen Wendelabschnitts 32 eine Radialabstützung R2 gegen eine zylindrische Innenseite 46 an dem Nachstellelement 26. Diese Innenseite 46 ist hier eine Bohrung in dem Nachstellelement 26.

Fig. 3a gibt die Situation zu Beginn der Zuspannung der Bremse wieder, solange also das vergrößerte Lüftspiel S (Fig. 1) noch nicht überwunden ist. Das Antriebselement 25 wird erst in Drehung versetzt, wenn das Lüftspiel überwunden wurde. Nach dem Durchlaufen des normalen Lüftspiels wird das Antriebselement durch den Schwenkhebel 15 in der Drehrichtung d1 in Drehung versetzt, und nimmt über den ersten Wendelabschnitt 31 die Schlingfeder 30 mit. Diese überträgt das Drehmoment über den zweiten Wendelabschnitt 32 auf das Nachstellelement 26. Auf der anderen Seite der Schlingfeder, also auf dem Abschnitt 32, erfolgt zusätzlich eine Drehmomentübertragung. In dieser Situation kann maximal ein Drehmoment übertragen werden, das nicht größer ist als das Freilaufmoment, welches hier das Überlastmoment ist. Es erfolgt eine Nachstellung, und der zwischenzeitlich eingetretene Bremsenverschleiß wird kompensiert.

Nur solange der Bremsbelag 3 noch nicht an der Bremsscheibe 2 anliegt, gibt die Schlingfeder 30 das Drehmoment an das Nachstellelement 26 weiter.

Sobald jedoch das gesamte Lüftspiel S (Fig. 1) zu Null geworden ist, sich also der Druckstempel 7 über den Bremsbelag 3 an die Bremsscheibe 2 angelegt hat, lässt sich das Nachstellelement 26 wegen der stark zunehmenden Reibung im Gewinde 9 nicht mehr verdrehen, wodurch es zu einem Aufweiten der Wendel kommt und das Freilaufmoment am ersten Wendelabschnitt 31 überwunden wird. Dieses Aufweiten wiederum führt zu einem Durchrutschen auf dem ersten Wendelabschnitt 31, wodurch der Effekt einer Überlastkupplung erreicht wird.

Beim Lösen der Bremse dreht der Schwenkhebel 15 das Antriebselement 25 in die entgegengesetzte Drehrichtung d2. Am Wendelabschnitt 31 baut sich ein reibschlüssiges Drehmoment auf, d. h. die Schlingfeder 30 zieht sich radial etwas zusammen. Dieses Zusammenziehen führt auf dem anderen Wendelabschnitt 32 zu einem Freilauf. Das entstehende Freilaufmoment ist so gering ausgelegt, dass es das Nachstellelement 26 nicht zu verdrehen vermag. Voraussetzung hierfür ist, dass das Hemmmoment an dem Nachstellelement 26 höher ist, als das Freilaufmoment. Das Hemmmoment an dem Nachstellelement 26 wird hier durch eine Tellerfeder 49 erzeugt, die gegen eine Befestigung im Bremssattel 6 und gegen den zentralen Stab 40 wirkt. Durch den Formschluss zwischen dem Stab 40 und dem Nachstellelement 26 wird das Hemmmoment übertragen. Es wird verhindert, dass die zuvor erfolgte Verschleißkompensation wieder rückgängig gemacht wird.

Die beiden Situationen sind auch in den Figuren 4a und 4b noch einmal illustriert. Dabei ist in der ersten Drehrichtung, d. h. im Fall der Zuspannung bzw. Nachstellung, M₁ das Freilaufmoment, und M₂ das durch Aufweiten bei R2 sich einstellende Sperrmoment. M₂ ist in diesem Fall größer als M₁.

Bei dem Rückhub gemäß Fig. 4b ist das Sperrmoment M₃ deutlich größer als das Freilaufmoment M₄. Bei R2 zieht sich die Wendel etwas zusammen.

Zum Austausch alter gegen neue Bremsbeläge 3 muss die Nachstellung manuell in ihre Ausgangsstellung verfahren werden. Hierzu wird der zentrale Stab 40 und das mit diesem verbundene Nachstellelement 26 in Drehrichtung d2 gedreht. Die Drehbewegung wird nicht auf das Antriebselement 25 übertragen, da sich der Wendelabschnitt 32 an der Radialabstützung R2 verkleinert und im Nachstellelement 26 durchrutscht (Freilauf).

Bei der zweiten Ausführungsform nach Fig. 5 sind gleichwirkende Bauteile mit denselben Bezugszeichen versehen, wie bei der ersten Ausführungsform nach den Figuren 1 und 2. Der erste Unterschied gegenüber der ersten Ausführungsform besteht darin, dass sich die Schlingfeder 30 nach innen hin gegen das Nachstellelement 26, und nach außen hin gegen das Antriebselement 25 abstützt. Zur Anlage der beiden Radialabstützungen R1, R2 der Schlingfeder 30 weist das Nachstellelement 26 einen zylindrischen Wellenabschnitt 56, und das Antriebselement 25 eine zylindrische Bohrung 54 auf.

Unterschiedlich zur ersten Ausführungsform ist ferner, dass der hier unverdrehbar im Bremsgehäuse geführte Druckstempel 7 in einer Gewindeverbindung 9A unmittelbar mit dem Nachstellelement 26 steht, welches hierzu mit einem Innengewinde versehen ist. Das Nachstellelement 26 ist zur Aufnahme der Zuspannkräfte über ein Axiallager 47 gegen das Druckstück 10A abgestützt. An dem Druckstück 10A stützt sich, wie bei der ersten Ausführungsform, der Schwenkhebel der hier nicht näher dargestellten Zuspanneinrichtung ab.

Außerdem ist bei Fig. 5 die Schlingfeder 30 ohne eine Stufe, d. h. sie weist auf ihrer ganzen Länge einen konstanten Innen- und Außenradius auf.

Über Tellerfedern 48 ist das Antriebselement 25, welches hier wie bei Fig. 1 mit einem radialen Arm als Mitnehmer 37 versehen ist, von der anderen Seite her gegen das Druckstück 10A abgestützt.

### Bezugszeichenliste

- 1: Bremsgehäuse
- 2: Bremsscheibe
- 3: Bremsbelag
- 4: Belagrückenplatte
- 5: Reibbelag
- 6: Bremssattel
- 7: Druckstempel
- 8: Fuß
- 9: Gewindeverbindung
- 9A: Gewindeverbindung
- 10: Druckstück
- 10A: Druckstück
- 15: Schwenkhebel
- 16: Schwenkachse
- 17: Hebelarm
- 19: Zuspanneinrichtung
- 20: Nachstelleinrichtung
- 21: Aufnahmeöffnung
- 25: Antriebselement
- 26: Nachstellelement
- 30: Schlingfeder, Übertragungseinrichtung
- 31: erster Wendelabschnitt
- 32: zweiter Wendelabschnitt
- 34: Längsnut
- 35: Vorsprung
- 37: radialer Arm, zweiter Mitnehmer
- 38: Zapfen, erster Mitnehmer
- 40: zentraler Stab
- 41: Antriebsritzel
- 44: Außenseite
- 46: Innenseite
- 47: Axiallager
- 48: Tellerfeder
- 49: Tellerfeder
- 54: Bohrung
- 56: Wellenabschnitt

- A: Achse der Nachstelleinrichtung
- A1: Achse
- d1: Drehrichtung
- d2: Drehrichtung
- F: Bremskraft
- M₁: Freilaufmoment
- M₂: Sperrmoment
- M₃: Sperrmoment
- M₄: Freilaufmoment
- R1: Radialabstützung
- R2: Radialabstützung
- S: Lüftspiel

## Patentansprüche

1. Fahrzeugbremse, insbesondere Fahrzeug-Scheibenbremse, mit einer die Bremskraft bereitstellenden Zuspanneinrichtung (19) aus einem Kraftglied, vorzugsweise einem Druckmittel-Zylinder, und einer druckverstärkenden Hebelanordnung, und mit einer Nachstelleinrichtung (20) zum Nachstellen des verschleißbedingten Lüftspiels der Bremse, wobei Bestandteile der Nachstelleinrichtung (20) ein drehbar angeordnetes, durch die Zuspanneinrichtung (19) betätigbares Antriebselement (25), ein auf derselben Achse (A) drehbar angeordnetes Nachstellelement (26) und eine im Bewegungsweg zwischen Antriebselement (25) und Nachstellelement (26) angeordnete Übertragungseinrichtung sind, und die Übertragungseinrichtung als wendelförmige Schlingfeder (30) ausgebildet ist, die längs eines ersten Wendelabschnitts (31) radial gegenüber dem Antriebselement (25), und längs eines zweiten Wendelabschnitts (32) radial gegenüber dem Nachstellelement (26) abgestützt ist, **dadurch gekennzeichnet, dass** sich die eine Radialabstützung (R1) nur an der Innenseite und die andere Radialabstützung (R2) nur an der Außenseite der Schlingfeder (30) befindet.

2. Fahrzeugbremse nach Anspruch 1, **dadurch gekennzeichnet, dass** sich die Radialabstützung (R2) gegen das Nachstellelement (26) an der Außenseite, und die Radialabstützung (R1) gegen das Antriebselement (25) an der Innenseite der Schlingfeder (30) befindet.

3. Fahrzeugbremse nach Anspruch 1, **dadurch gekennzeichnet, dass** sich die Radialabstützung (R2) gegen das Nachstellelement (26) an der Innenseite, und die Radialabstützung (R1) gegen das Antriebselement (25) an der Außenseite der Schlingfeder (30) befindet.

4. Fahrzeugbremse nach Anspruch 1, 2 oder 3, **dadurch gekennzeichnet, dass** sich jeder der zwei Wendelabschnitte (31, 32) über mehrere Wendelumdrehungen erstreckt.

5. Fahrzeugbremse nach Anspruch 4, **dadurch gekennzeichnet, dass** sich jeder der zwei Wendelabschnitte (31, 32) über mindestens drei Wendelumdrehungen erstreckt.

6. Fahrzeugbremse nach einem der Ansprüche 1 bis 5, **dadurch gekennzeichnet, dass** die Schlingfeder (30) in spannungslosem Zustand zylindrisch mit über ihrer gesamten Länge konstantem Innen- und Außenradius gestaltet ist.

7. Fahrzeugbremse nach einem der Ansprüche 1 bis 5, **dadurch gekennzeichnet, dass** die Schlingfeder (30) in spannungslosem Zustand gestuft gestaltet ist, und sich einstückig aus zwei zylindrischen Längsabschnitten mit jeweils unterschiedlichem Durchmesser der Federwindungen zusammensetzt.

8. Fahrzeugbremse nach Anspruch 7, **dadurch gekennzeichnet, dass** die Federwindungen auf dem einen Längsabschnitt einen kleineren Durchmesser und an ihrer Innenseite die Radialabstützung gegen das Antriebselement (25), und die Federwindungen auf dem anderen Längsabschnitt einen im Vergleich größeren Durchmesser und an ihrer Außenseite die Radialabstützung gegen das Nachstellelement (26) aufweisen.

9. Fahrzeugbremse nach einem der vorangehenden Ansprüche, **dadurch gekennzeichnet, dass** Bestandteil der Hebelanordnung ein in einem Bremsgehäuse (1) der Fahrzeugbremse gelagerter Schwenkhebel (15) ist, der über ein Getriebe (38, 37) in Drehverbindung mit dem Antriebselement (25) steht.

10. Fahrzeugbremse nach Anspruch 9, **dadurch gekennzeichnet, dass** sich das Getriebe aus zwei zum gegenseitigen Eingriff ausgebildeten Mitnehmern (38, 37) zusammensetzt, wobei der eine Mitnehmer (38) an dem Schwenkhebel (15) im Abstand (A1) zu dessen Schwenkachse (16), und der andere Mitnehmer (37) an dem Antriebselement (25) im Abstand zu dessen Achse (A) angeordnet ist.

11. Fahrzeugbremse nach Anspruch 9 oder 10, **dadurch gekennzeichnet, dass** das Getriebe (38, 37) in Drehrichtung Spiel aufweist, so dass im Rahmen des Spiels keine Betätigung des Antriebselements (25) erfolgt.

## Claims

1. Vehicle brake, in particular a vehicle disc brake, with a brake application device consisting of a force element, preferably a pressure medium cylinder which provides a braking force, and a pressure-intensifying lever arrangement, and with a readjustment device (20) for readjustment of the wear-induced clearance of the brake, wherein components of the readjustment device (20) are a rotatably arranged drive element (25) which can be actuated by the brake application device (19), a readjustment element (26) which is arranged rotatably on the same axis (A), and a transmission device which is arranged in a movement path between the drive element (25) and the readjustment element (26), and the transmission device is designed as a helical wrap spring (30) which is supported along a first coil section (31) radially relative to the drive element (25), and is supported along a second coil section (32) radially relative to the readjustment element (26); **characterised in that** one radial support (R1) is located only on the inside of the wrap spring (30) and the other radial support (R2) is located only on the outside of the wrap spring.

2. Vehicle brake according to claim 1, **characterised in that** the radial support (R2) is located against the readjustment element (26) on the outside of the wrap spring (30) and the radial support (R1) is located against the drive element (25) on the inside of the wrap spring.

3. Vehicle brake according to claim 1, **characterised in that** the radial support (R2) is located against the readjustment element (26) on the inside of the wrap spring (30) and the radial support (R1) is located against the drive element (25) on the outside of the wrap spring.

4. Vehicle brake according to claim 1, 2 or 3, **characterised in that** each of the two coil sections (31, 32) extends over a plurality of coil turns.

5. Vehicle brake according to claim 4, **characterised in that** each of the two coil sections (31, 32) extends over at least three coil turns.

6. Vehicle brake according to one of claims 1 to 5, **characterised in that** in an unstressed state the wrap spring (30) is cylindrical and is configured with a constant internal and external radius over its entire length.

7. Vehicle brake according to one of claims 1 to 5, **characterised in that** in an unstressed state the wrap spring (30) has a stepped configuration and is composed integrally of two cylindrical longitudinal sections with spring windings having different diameters.

8. Vehicle brake according to claim 7, **characterised in that** the spring windings on one longitudinal section have a smaller diameter and have on their inside the radial support against the drive element (25), and the spring windings on the other longitudinal section have a comparatively larger diameter and have on their outside the radial support against the readjustment element (26).

9. Vehicle brake according to one of the preceding claims, **characterised in that** a component of the lever arrangement is a pivot lever (15) mounted in a brake housing (1) of the vehicle brake which is rotationally connected by means of a gear mechanism (38, 37) to the drive element (25).

10. Vehicle brake according to claim 9, **characterised in that** the gear mechanism is composed of two drivers (38, 37) which are designed for mutual engagement, wherein one driver (38) is arranged on the pivot lever (15) at a distance (A1) from the pivot axis (16) thereof, and the other driver (37) is arranged on the drive element (25) at a distance from the axis (A) thereof.

11. Vehicle brake according to claim 9 or 10, **characterised in that** the gear mechanism (38, 37) has play in the direction of rotation, so that no actuation of the drive element (25) occurs within the range of the play.

## Revendications

1. Frein de véhicule, en particulier frein à disque de véhicule, avec un dispositif de serrage (19), fournissant la force de freinage, composé d'un organe de force, de préférence un cylindre de pression, et d'un ensemble de levier amplifiant la pression, et avec un dispositif de rattrapage (20) destiné à rattraper le jeu d'air du frein dû à l'usure, des composants du dispositif de rattrapage (20) étant un élément d'entraînement (25) disposé en rotation et pouvant être actionné par le dispositif de serrage (19), un élément de rattrapage (26) disposé en rotation sur le même axe (A) et un dispositif de transmission disposé sur le trajet de déplacement entre l'élément d'entraînement (25) et l'élément de rattrapage (26), et le dispositif de transmission étant constitué en tant que ressort enroulé (30) en forme d'hélice qui est supporté le long d'un premier tronçon d'hélice (31) radialement par rapport à l'élément d'entraînement (25), et le long d'un deuxième tronçon d'hélice (32) radialement par rapport à l'élément de rattrapage (26), **caractérisé en ce qu'**un appui radial (R1) se trouve uniquement sur le côté intérieur, et l'autre appui radial (R2) se trouve uniquement sur le côté extérieur du ressort enroulé (30).

2. Frein de véhicule selon la revendication 1, **caractérisé en ce que** l'appui radial (R2) se trouve contre l'élément de rattrapage (26) sur le côté extérieur, et l'appui radial (R1) se trouve contre l'élément d'entraînement (25) sur le côté intérieur du ressort enroulé (30).

3. Frein de véhicule selon la revendication 1, **caractérisé en ce que** l'appui radial (R2) se trouve contre l'élément de rattrapage (26) sur le côté intérieur, et l'appui radial (R1) se trouve contre l'élément d'entraînement (25) sur le côté extérieur du ressort enroulé (30).

4. Frein de véhicule selon la revendication 1, 2 ou 3, **caractérisé en ce que** chacun des deux tronçons d'hélice (31, 32) s'étend sur plusieurs tours d'hélice.

5. Frein de véhicule selon la revendication 4, **caractérisé en ce que** chacun des deux tronçons d'hélice (31, 32) s'étend sur au moins trois tours d'hélice.

6. Frein de véhicule selon l'une des revendications 1 à 5, **caractérisé en ce que**, dans l'état sans tension, le ressort enroulé (30) est constitué de façon cylindrique avec un rayon intérieur et un rayon extérieur constants sur toute sa longueur.

7. Frein de véhicule selon l'une des revendications 1 à 5, **caractérisé en ce que**, dans l'état sans tension, le ressort enroulé (30) est constitué de façon étagée et est composé d'une seule pièce à partir de deux tronçons longitudinaux cylindriques avec un diamètre des spires de ressort respectivement différent.

8. Frein de véhicule selon la revendication 7, **caractérisé en ce que**, sur un tronçon longitudinal, les spires de ressort présentent un diamètre plus petit et, sur leur côté intérieur, l'appui radial contre l'élément d'entraînement (25) et, sur l'autre tronçon longitudinal, les spires de ressort présentent un diamètre comparativement plus grand et, sur leurs côté extérieur, l'appui radial contre l'élément de rattrapage (26).

9. Frein de véhicule selon l'une des revendications précédentes, **caractérisé en ce qu'**un levier pivotant (15) supporté dans un boîtier de frein (1) du frein de véhicule forme un composant de l'ensemble de levier et est en liaison de rotation avec l'élément d'entraînement (25) par le biais d'un engrenage (38, 37).

10. Frein de véhicule selon la revendication 9, **caractérisé en ce que** l'engrenage se compose de deux entraîneurs (38, 37) constitués pour l'engrènement réciproque, un entraîneur (38) étant disposé sur le levier pivotant (15) à une distance (A1) de son axe de pivotement (16), et l'autre entraîneur (37) étant disposé sur l'élément d'entraînement (25) à distance de son axe (A).

11. Frein de véhicule selon la revendication 9 ou 10, **caractérisé en ce que** l'engrenage (38, 37) présente du jeu dans le sens de la rotation de telle sorte que, dans le cadre du jeu, aucun actionnement de l'élément d'entraînement (25) ne survient.
